# EUROPEAN PATENT APPLICATION

(11) **EP 2 104 289 A2**
(43) Date of publication of application: **23.09.2009**
(21) Application number: 07252503.3
(22) Date of filing: 20.06.2007
(51) Int. Cl.: H04L 12/56

(54) **Controlling interference between up-link transmissions**

(71) Applicant: Nokia Siemens Networks Oy, 02610 Espoo (FI)
(72) Inventor: The designation of the inventor has not yet been filed
(74) Representative: Ruuskanen, Juha-Pekka

(57) **Abstract**

A method for use in a communications system comprising a plurality of cells, each cell associated with a base station configured for wireless communications with one or more mobile stations in the cell; wherein said method comprises: receiving from a first mobile station in a first one of said cells a first indicator of the power with which said first mobile station receives a base station signal associated with a second one of the cells; and making a determination on the basis of at least said first indicator as to whether said first mobile station should be instructed to change at least one of its wireless transmission parameters in order to reduce the interference of its transmissions with transmissions made by one or more mobile stations in the second cell.

## Description

The present invention relates to a technique for dealing with excessive levels of inter-cell interference between uplink transmissions from mobile stations. In one embodiment, it relates to dealing with excessive levels of inter-cell interference between uplink transmissions from mobile stations in an Evolved Universal Terrestrial Radio Access Network (E-UTRAN).

E-UTRAN comprises E-UTRAN Node Bs (eNBs) which are configured to provide base station and control functionalities. In these systems various functions that have been conventionally handled based on centralised control can be handled in a distributed manner. This kind of distributed architecture is sometimes referred to as a "flat architecture". For example, the eNBs nodes can provide independently E-UTRA features such as user plane radio link control/medium access control/physical layer protocol (RLC/MAC/PHY) and control plane radio resource control (RRC) protocol terminations towards the user devices. E-UTRAN architecture is described in more detail in TS36.300 v8.0.0 Evolved Universal Terrestrial radio Access Network (E-UTRAN); Overall Description; Stage 2 (Release 8).

There will typically arise situations in which one up-link transmission from a mobile station in one cell suffers excessive interference as a result of one or more uplink transmissions made by one or more mobile stations neighbouring cells.

It is an aim of the present invention to provide a simple and effective technique for dealing with such excessive levels of interference without unnecessarily changing the transmission parameters (transmission power etc.) for mobile stations whose up-link transmissions contribute relatively little to such excessive levels of interference.

According to the present invention, there is provided:
1. An apparatus for use in a communications system comprising a plurality of cells, each cell associated with a base station configured for wireless communications with one or more mobile stations in the cell; wherein said apparatus is configured to:
   receive from a first mobile station in a first one of said cells a first indicator of the power with which said first mobile station receives a base station signal associated with a second one of said cells; and
   make a determination on the basis of at least said first indicator as to whether said first mobile station should be instructed to change at least one of its wireless transmission parameters in order to reduce the interference of its transmissions with wireless transmissions from one or more mobile stations in the second cell.
2. An apparatus according to 1, which is further configured to also receive a second indicator of the power at which said base station signal was transmitted, and to make said determination on the basis of at least said first and second indicators.
3. An apparatus according to 2, which is further configured to receive a third indicator of a first threshold value for pathloss experienced by said second cell base station signal between said base station and any mobile station outside the second cell, and wherein said determination comprises comparing said first threshold value with an actual pathloss value calculated from at least said first and second indicators.
4. An apparatus according to 2, which is further configured to receive a fourth indicator of a second threshold value for the power with which any transmission from any mobile station outside the second cell is experienced by the base station for said second cell, and wherein said determination comprises comparing said second threshold value with an actual power value calculated from at least said first and second indicators and a fifth indicator of the current transmission power for said first mobile station.
5. An apparatus according to 4, wherein said fifth indicator is received from said first mobile station.
6. An apparatus according to any of 1 to 5, which is further configured to receive a sixth indicator of the Q offset parameter for the second cell, and wherein said determination is made also on the basis of said sixth indicator.
7. An apparatus according to any of 1 to 6, which is configured to make said determination when it receives an indication that transmissions made by one or more mobile stations in the second cell are experiencing excessive interference from transmissions made by one or more mobile stations in other cells, and wherein one or both of said second and sixth indicators and/or the respective one of said third and fourth indicators is provided together with said indication.
8. An apparatus according to 1, which is configured to receive a seventh indicator of a third threshold value for the power with which said second cell base station signal is received at any mobile station outside the second cell, and wherein said determination comprises comparing said third threshold value with an actual received power value calculated from at least said first indicator.
9. An apparatus according to 8, which is configured to make said determination when it receives an indication that transmissions made by one or more mobile stations in the second cell are experiencing excessive interference from transmissions made by one or more mobile stations in other cells, and wherein said seventh indicator is provided together with said indication.
10. A method for use in a communications system comprising a plurality of cells, each cell associated with a base station configured for wireless communications with one or more mobile stations in the cell; wherein said method comprises:
   receiving from a first mobile station in a first one of said cells a first indicator of the power with which said first mobile station receives a base station signal associated with a second one of the cells; and
   making a determination on the basis of at least said first indicator as to whether said first mobile station should be instructed to change at least one of its wireless transmission parameters in order to reduce the interference of its transmissions with transmissions made by one or more mobile stations in the second cell.
11. A method according to 10, further comprising receiving a second indicator of the power at which the base station signal associated with the second cell was transmitted, and making said determination on the basis of at least said first and second indicators.
12. A method according to 11, further comprising receiving a third indicator of a first threshold value for pathloss experienced by said base station signal associated with the second cell between the base station and any mobile station outside the second cell, and wherein said determination comprises comparing said first threshold value with an actual pathloss value calculated from at least said first and second indicators.
13. A method according to 11, further comprising receiving a fourth indicator of a second threshold value for the power with which any transmission from any mobile station outside the second cell is experienced by the base station for the second cell, and wherein said determination comprises comparing said second threshold value with an actual power value calculated from at least said first and second indicators and a fifth indicator of the current transmission power for said first mobile station.
14. A method according to 13, wherein said fifth indicator is received from said first mobile station.
15. A method according to any of 10 to 14, further comprising receiving a sixth indicator of the Q offset parameter for the second cell, and wherein said determination is made also on the basis of said sixth indicator.
16. A method according to any of 10 to 15 comprising making said determination after receiving an indication that transmissions made by one or more mobile stations in the second cell are experiencing excessive interference from transmissions made by one or more mobile stations in other cells, and wherein one or both of said second and sixth indicators and/or the respective one of said third and fourth indicators is provided together with said indication.
17. A method according to 10, which is configured to receive a seventh indicator of a third threshold value for the power with which said base station signal associated with the second cell is received at any mobile station outside the second cell, and wherein said determination comprises comparing said third threshold value with an actual received power value calculated from at least said first indicator.
18. A method according to 17, comprising making said determination after receiving an indication that transmissions made by one or more mobile stations in the second cell are experiencing excessive interference from transmissions made by one or more mobile stations in other cells, and wherein said seventh indicator is provided together with said indication.
19. An apparatus for use in a communications system comprising a plurality of cells, each cell associated with a base station configured for wireless communications with one or more mobile stations in the cell; wherein said apparatus is configured to:
   communicate to a controlling unit for a first one of said cells an indicator of the power with which a base station signal associated with a second one of said cells is received at a first mobile station in said first cell.
20. An apparatus according to 19, which is further configured to communicate to said controlling unit an indicator of the current transmission power for said first mobile station.
21. A method for use in a communications system comprising a plurality of cells, each cell associated with a base station configured for wireless communications with one or more mobile stations in the cell; wherein said method comprises:
   communicating to a controlling unit for a first one of said cells an indicator of the power with which a base station signal associated with a second one of said cells is received at a first mobile station in said first cell.
22. A method according to 21, further comprising communicating to said controlling unit an indicator of the current transmission power for said first mobile station.
23. An apparatus for use in a communications system comprising a plurality of cells, each cell associated with a base station configured for wireless communications with one or more mobile stations in the cell; wherein said apparatus is configured to:
   communicate to a controlling unit for a first one of the cells a first indicator of the transmission power of a base station signal associated with a second one of the cells and capable of being received by a first mobile station in said first cell.
24. An apparatus according to 23, which is further configured to communicate to said controlling unit for said first cell a second indicator of a threshold value for pathloss experienced by said signal between the base station for the second cell and any mobile station outside the second cell.
25. An apparatus according to 23, which is further configured to communicate to said controlling unit a third indicator of a threshold value for the power with which any transmission from any mobile station outside the second cell is experienced by the base station for the second cell..
26. An apparatus according to any of 23 to 25, which is further configured to communicate to said controlling unit a fourth indicator of the Q offset parameter for the second cell.
27. An apparatus according to any of 23 to 26, which is further configured to communicate to said controlling unit an indication that transmissions made by one or more mobile stations in the second cell are experiencing excessive interference from transmissions made by one or more mobile stations in other cells, and to communicate said first indicator together with said indication.
28. An apparatus according to 26, which is further configured to communicate to said controlling unit an indication that transmissions made by one or more mobile stations in the second cell are experiencing excessive interference from transmissions made by one or more mobile stations in other cells, and to communicate said first indicator and/or said fourth indicator to said controlling unit together with said indication.
29. An apparatus for use in a communications system comprising a plurality of cells, each cell associated with a base station configured for wireless communications with one or more mobile stations in the cell; wherein said apparatus is configured to:
   communicate to a controlling unit for a first one of the cells an indicator of a threshold value for the power with which said base station signal associated with a second one of the cells is received at any mobile station outside the second cell.
30. A method for use in a communications system comprising a plurality of cells, each cell associated with a base station configured for wireless communications with one or more mobile stations in the cell; wherein said method comprises:
   communicating to a controlling unit for a first one of the cells a first indicator of the transmission power of a base station signal associated with a second one of the cells and capable of being received by a first mobile station in said first cell.
31. A method according to 30, further comprising communicating to said controlling unit for said first cell a second indicator of a threshold value for pathloss experienced by said base station signal associated with the seconc cell between the base station and any mobile station outside the second cell.
32. A method according to 30, further comprising communicating to said controlling unit a third indicator of a threshold value for the power with which any transmission from any mobile station outside the second cell is experienced by the base station for the second cell.
33. A method according to any of 30 to 32, further comprising communicating to said controlling unit a fourth indicator of the Q offset parameter for the second cell.
34. A method according to any of 30 to 33, further comprising communicating to said controlling unit an indication that transmissions made by one or more mobile stations in the second cell are experiencing excessive interference from transmissions made by one or more mobile stations in other cells, and to communicate said first indicator together with said indication.
35. A method according to 33, further comprising communicating to said controlling unit an indication that transmissions made by one or more mobile stations in the second cell are experiencing excessive interference from transmissions made by one or more mobile stations in other cells, and communicating said first indicator and/or said fourth indicator to said controlling unit together with said indication.
36. A method for use in a communications system comprising a plurality of cells, each cell associated with a base station configured for wireless communications with one or more mobile stations in the cell; wherein said method comprises communicating to a controlling unit for a first one of the cells a fifth indicator of a threshold value for the power with which a base station signal associated with a second one of the cells is received at any mobile station outside the second cell.
37. A base station including an apparatus according to any of 1 to 9 and 23 to 29.
38. A user equipment including an apparatus according to 19 or 20.
39. A communication system including a plurality of base stations according to 37 and a plurality of user equipments according to 38.
40. A computer program product comprising program code means which when loaded into a computer of a base station configures the base station for performing the method of any of 10 to 18 and 30 to 36.
41. A computer program product comprising program code means which when loaded into a computer of a mobile station configures the mobile station for performing the method of 21 or 22.

Embodiments of the invention are described in detail hereunder, by way of example only, with reference to the accompanying figures, in which:

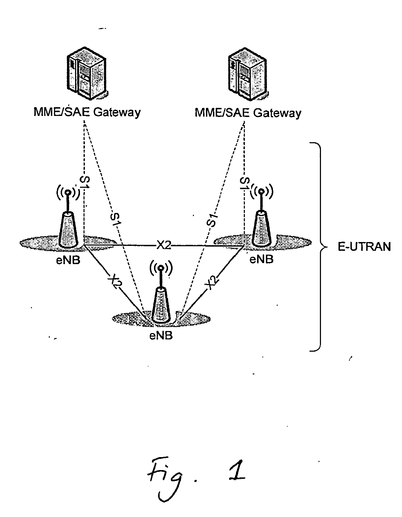

Figure 1 illustrates an EUTRAN architecture, and in particular identifies the standard interfaces between eNodeBs and the standard interfaces between eNodeBs and MME (Mobility Management Entity)/SAE (System Architecture Evolution (3GPP)) gateways; and
Figure 2 illustrates an example of a cell layout for explaining interference control techniques according to embodiments of the present invention;

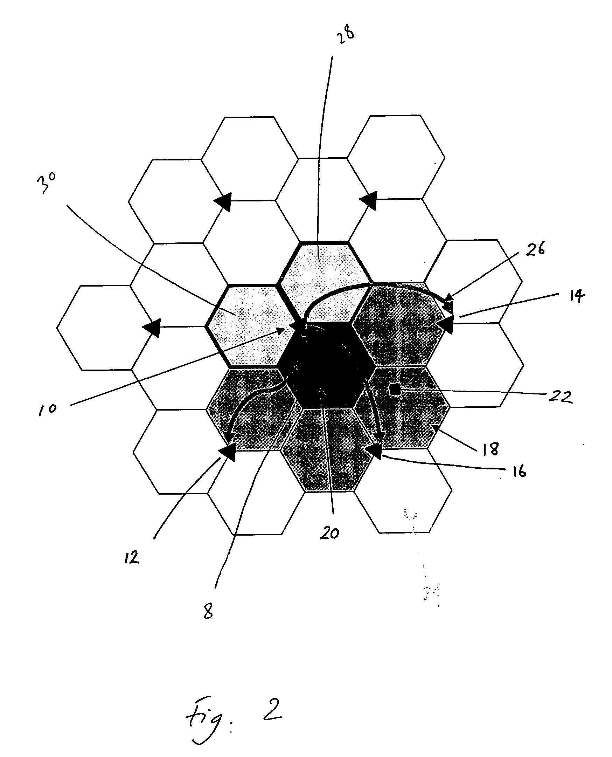

With reference to Figure 2, each embodiment of the invention shares the following features:

Each eNodeB 10, 12, 14, 16 controls three cells, and broadcasts a respective unique reference signal for each of the three cells that it controls in order to facilitate mobility decisions. The reference signal transmit power may not be the same among all cells and for all time instants.

Each mobile station 20, 22 communicates to its serving eNodeB 10, 12, 14, 16 measurements of the power with which they receive the reference signals broadcast by other eNodeBs 10, 12, 14, 16 (received reference signal power (RSRP).

A first embodiment of the present invention is characterised by the following features.

The power (RSTXP) with which each eNodeB 10, 12, 14, 16 currently transmits the reference signals mentioned above is communicated to other eNodeBs 10, 12, 14, 16.

When one eNodeB 10 identifies an excessive level of interference for an up-link transmission between a mobile station 20 in a cell served by that eNodeB 10, it communicates the existence of this high UL interference level or a corresponding overload situation to eNodeBs 12, 14, 16 serving cells adjacent to the cell for which the excessive level of interference was identified (hereafter referred to as the overloaded cell). For simplicity, the next steps are described for just one mobile station 22 located in a cell adjacent to the overloaded cell and served by a neighbouring eNodeB 16, but each of the eNodeBs 10, 12, 14, 16 (including eNodeB 10 serving the overloaded cell) serving one or more cells adjacent to the overloaded cell will also do the same for all mobile stations located in the adjacent cells that they serve. eNodeB 16 uses the above-mentioned RSRP information received from mobile station 22 and the RSTXP information received from eNodeB 10 for the overloaded cell 8 to derive the pathloss of the reference signal for the overloaded cell between eNodeB 10 and mobile station 22. eNodeB 16 compares the pathloss thus derived with a threshold value communicated to eNodeB 16. This threshold value may, for example, be set by O&M_(Operations & Maintenance) or set by the eNodeB 10 for the overloaded cell. If the derived pathloss value is below the threshold value, then the mobile station 22 is considered as critically interfering, and eNodeB 16 takes countermeasures such as initiating a down-link command to mobile station 22 to reduce its up-link power/power spectral density (PSD), and/or reducing the granted data rate for the mobile station 22, and/or allocating different frequency resources for the up-link between mobile station 22 and eNodeB 16.

A second embodiment of the present invention differs from the first invention as follows. Each eNodeB also knows the current transmission (ULTX) power of the mobile stations in the cells that it serves (for example, because of reports made by the mobile stations to the eNodeB, or as a consequence of other up-link transmit power control operations performed by the eNodeB). Instead of the pathloss vs. pathloss threshold comparison of the first embodiment, the determination of whether a mobile station is considered to be critically interfering is made as follows. For each cell, a power threshold value for the power (ULRP) with which a transmission made by a mobile station in other cells (including those served by neighbouring eNodeBs) is experienced at an eNodeB receiver for said cell is communicated to the neighbouring eNodeBs. Again, we refer to the above-mentioned example of mobile station 22 and eNodeB 16. The ULTX power for mobile station 22 minus the pathloss (derived from the RSRP information received from mobile station 22 and the RSTXP information received from the eNodeB 10 for the overloaded cell 8) is compared against said ULRP power threshold for overloaded cell 8 to determine whether mobile station 22 should be considered as critically interfering. If the result of the comparison is that mobile station 22 is considered to be interfering, the eNodeB 16 for mobile station 22 takes countermeasures such as those mentioned above for the first embodiment.

The ULRP power threshold for a cell may (i) be either set by O&M or sent from the eNodeB serving that cell to all neighbouring eNodeBs 12, 14, 16, and (ii) may have the same value across the entire network of cells or can have a value individually selected by the eNodeB 10 for the cell.

A third embodiment differs from the first embodiment as follows. A cell-specific offset Q_off for each cell is broadcast by the eNodeB 10, 12, 14, 16 serving that cell. The Q_off is a configurable parameter used primarily by mobile stations in the cell to offset the measurements of signals received from the eNodeB serving that cell. Mobile stations monitor (i) broadcast Q_off information for the cell in which they are located, and also (ii) Q_off information for other cells, including that broadcast by neighbouring eNodeBs for the cells they serve. Again, we refer to the example of mobile station 22 and eNodeB 16 serving the cell in which it is located. Mobile station 22 receives Q_off information for overloaded cell 8 broadcast by eNodeB 10 serving the overloaded cell. As in the first embodiment, the mobile station 22 reports the above-mentioned RSRP measurements to eNodeB 16, but does so only after correcting it by adding the cell-specific Q_off for overloaded cell 8 broadcast by eNodeB 10. The Q_off information for each cell is also exchanged between eNodeBs 10, 12, 14, 16 via the network that connects the eNodeBs. eNodeB 16 derives the pathloss for mobile station 22 by subtracting from the transmission power of the reference signal (RSTXP) for the overloaded cell (i) the cell-specific Q_off for the overloaded cell, and (ii) the above-mentioned corrected RSRP value received from mobile station 22 for the reference signal for the overloaded cell 8. The thus derived pathloss is either (a) compared against a pathloss threshold as in the first embodiment, or (b) used as in the second embodiment to derive a value for the power (ULRP) with which eNodeB 10 receiver for the overloaded cell experiences a transmission made by mobile station 22, which is then compared against an ULRP threshold value.

In variations of each of the embodiments described above, the RSTXP information and/or the offset Q_off information for the overloaded cell and/or the threshold value is "piggybacked" (i.e. signalled together) on top of the overload indication sent from the eNodeB 10 for the overloaded cell to neighbouring eNodeBs 12, 14, 16 for adjacent cells via the network that connects the eNodeBs. In other words, this information is only sent in the event of an overload indication; the overload indication triggers the sending of the RSTXP information and/or the offset Q_off information for the overloaded cell. In this way, signalling can be reduced compared to the case where the RS TX power signalling is decoupled from the signalling of the overload indication.

A further embodiment of the present invention is characterised by the following features. When one eNodeB 10 identifies an excessive level of interference for an up-link transmission between a mobile station 20 in a cell served by it, it communicates the existence of this high UL interference level or a corresponding overload situation to eNodeBs 12, 14, 16 serving cells adjacent to the cell for which the excessive level of interference was identified. With this overload indication, the eNodeB 10 for the overloaded cell provides to each neighbouring eNodeB 12, 14, 16 serving one or more cells adjacent to the overloaded cell an RSRP related threshold specific for the overloaded cell (which takes into account the Q_off and RSTX power for the overloaded cell). For simplicity, the next steps are described for just one mobile station 22 located in a cell adjacent to the overloaded cell and served by a neighbouring eNodeB 16, but each eNodeBs 10, 12, 14, 16 (including eNodeB 10 serving the overloaded cell) will also do the same for all mobile stations located in the adjacent cells that they serve. eNodeB 16 compares the RSRP value reported by mobile station 22 for overloaded cell 8 (this RSRP value may have been corrected by mobile station 22 before reporting on the basis of cell-specific Q_off information received from the eNodeB 10 for the overloaded cell 8), and compares it against the threshold value received from eNodeB 10 for the overloaded cell 8 together with the overload indication.

In addition, the current uplink transmission power for mobile station 22 may also be taken into account. If the mobile station 22 is identified as being critically interfering, then eNodeB 16 takes countermeasures such as those mentioned for the first embodiment.

In one variation of this embodiment, the RSTXP information and/or the offset Q_off information for the overloaded cell and/or the threshold value is "piggybacked" (i.e. signalled together) on top of the overload indication sent from the eNodeB 10 for the overloaded cell to neighbouring eNodeBs 12, 14, 16 for adjacent cells via the network that connects the eNodeBs.

For all the embodiments described above, the basis of deriving the strongest uplink interferers from downlink reference signal measurements is the assumption that a reciprocal relationship between the two exists even if the downlink and uplink transmissions are not using the same frequency band.

The above-mentioned signalling between eNodeBs 10, 12, 14, 16 could be carried out via the X2 interface 26. For those adjacent cells 28, 30 which share an eNodeB 10 with the overloaded cell 8, it is clear no extra signalling via standard interfaces is required.

The above description of embodiments is provided by way of example only. There are a number of ways in which the present invention could be alternatively applied. For example, cells could be further sectorized, and/or the above-described procedures could also be carried out for mobile stations in a second or more outer rings of adjacent cells. Also, the present invention is also applicable to mobile communication systems other than EUTRAN/LTE systems, particularly other kinds of cellular communication systems.

In one example, the mobile stations obtain the cell-specific Q_off information for neighbouring cells from the P-BCH (primary broadcast channel) for those cells. In another example, the mobile stations could obtain the cell-specific Q_off information for neighbouring cells from information signalled on the D-BCH (dynamic broadcast channel) for the cell in which the respective mobile station is located. In the latter case, the information signalled on the D-BCH may constitute a list of Q_off parameters for each of the plurality of neighbouring cells. In order to provide this list, each eNodeB could be provided with Q_off information for the cells served by other eNodeBs via X2 interface or via O&M.

The Q_off information may be defined as a common parameter relative to all other cells (with the result that mobile stations in adjacent cells apply the same Q_off regardless of exactly which adjacent cell they are located). Alternatively, the Q_off information could comprises a set of values, one for each adjacent cell (with the result that mobile stations in adjacent cells may apply a different Q_off value depending on the identity of the specific adjacent cell in which they are located). This extra information could be provided via X2 interfaces or O&M and included in a list on D-BCH for the cell in which the respective mobile station is located. In this case also, each eNodeB serving a cell adjacent to the overloaded cell would automatically know the selected Q_off value applied by a mobile station in any of the adjacent cells that it serves (since the Q_off information is signalled to the mobile station via the D-BCH for the channels served by said eNodeB).

With the techniques described above, it is possible to identify the most interfering mobile stations amongst all those located in cells adjacent the overloaded cell, and it is therefore possible to deal with excessive uplink interference without unnecessarily changing the uplink transmission parameters of all mobile stations in all adjacent cells (which might result in degrading the uplink performance). The result is an efficient uplink interference control.

Also, the mobile stations do not need to report pathloss to neighbouring eNodeBs, which would increase the complexity of the mobile stations. The downlink RS TX power/EPRE (energy per resource element) does not have to be signalled in the P-BCH (it could be sent on D-BCH) and/or the mobile station does not have to read the downlink RS TX power/EPRE from the P-BCH of neighbouring cells.

The applicant draws attention to the fact that the present invention may include any feature or combination of features disclosed herein either implicitly or explicitly or any generalisation thereof, without limitation to the scope of any definitions set out above. In view of the foregoing description it will be evident to a person skilled in the art that various modifications may be made within the scope of the invention.

## Claims

1. An apparatus for use in a communications system comprising a plurality of cells, each cell associated with a base station configured for wireless communications with one or more mobile stations in the cell; wherein said apparatus is configured to:
receive from a first mobile station in a first one of said cells a first indicator of the power with which said first mobile station receives a base station signal associated with a second one of said cells; and
make a determination on the basis of at least said first indicator as to whether said first mobile station should be instructed to change at least one of its wireless transmission parameters in order to reduce the interference of its transmissions with wireless transmissions from one or more mobile stations in the second cell.

2. An apparatus according to claim 1, which is further configured to also receive a second indicator of the power at which said base station signal was transmitted, and to make said determination on the basis of at least said first and second indicators.

3. An apparatus according to claim 2, which is further configured to receive a third indicator of a first threshold value for pathloss experienced by said second cell base station signal between said base station and any mobile station outside the second cell, and wherein said determination comprises comparing said first threshold value with an actual pathloss value calculated from at least said first and second indicators.

4. An apparatus according to claim 2, which is further configured to receive a fourth indicator of a second threshold value for the power with which any transmission from any mobile station outside the second cell is experienced by the base station for said second cell, and wherein said determination comprises comparing said second threshold value with an actual power value calculated from at least said first and second indicators and a fifth indicator of the current transmission power for said first mobile station.

5. An apparatus according to claim 4, wherein said fifth indicator is received from said first mobile station.

6. An apparatus according to any preceding claim, which is further configured to receive a sixth indicator of the Q offset parameter for the second cell, and wherein said determination is made also on the basis of said sixth indicator.

7. An apparatus according to any preceding claim, which is configured to make said determination when it receives an indication that transmissions made by one or more mobile stations in the second cell are experiencing excessive interference from transmissions made by one or more mobile stations in other cells, and wherein one or both of said second and sixth indicators and/or the respective one of said third and fourth indicators is provided together with said indication.

8. An apparatus according to claim 1, which is configured to receive a seventh indicator of a third threshold value for the power with which said second cell base station signal is received at any mobile station outside the second cell, and wherein said determination comprises comparing said third threshold value with an actual received power value calculated from at least said first indicator.

9. An apparatus according to claim 8, which is configured to make said determination when it receives an indication that transmissions made by one or more mobile stations in the second cell are experiencing excessive interference from transmissions made by one or more mobile stations in other cells, and wherein said seventh indicator is provided together with said indication.

10. A method for use in a communications system comprising a plurality of cells, each cell associated with a base station configured for wireless communications with one or more mobile stations in the cell; wherein said method comprises:
receiving from a first mobile station in a first one of said cells a first indicator of the power with which said first mobile station receives a base station signal associated with a second one of the cells; and
making a determination on the basis of at least said first indicator as to whether said first mobile station should be instructed to change at least one of its wireless transmission parameters in order to reduce the interference of its transmissions with transmissions made by one or more mobile stations in the second cell.

11. A method according to claim 10, further comprising receiving a second indicator of the power at which the base station signal associated with the second cell was transmitted, and making said determination on the basis of at least said first and second indicators.

12. A method according to claim 11, further comprising receiving a third indicator of a first threshold value for pathloss experienced by said base station signal associated with the second cell between the base station and any mobile station outside the second cell, and wherein said determination comprises comparing said first threshold value with an actual pathloss value calculated from at least said first and second indicators.

13. A method according to claim 11, further comprising receiving a fourth indicator of a second threshold value for the power with which any transmission from any mobile station outside the second cell is experienced by the base station for the second cell, and wherein said determination comprises comparing said second threshold value with an actual power value calculated from at least said first and second indicators and a fifth indicator of the current transmission power for said first mobile station.

14. A method according to claim 13, wherein said fifth indicator is received from said first mobile station.

15. A method according to any of claims 10 to 14, further comprising receiving a sixth indicator of the Q offset parameter for the second cell, and wherein said determination is made also on the basis of said sixth indicator.

16. A method according to any of claims 10 to 15 comprising making said determination after receiving an indication that transmissions made by one or more mobile stations in the second cell are experiencing excessive interference from transmissions made by one or more mobile stations in other cells, and wherein one or both of said second and sixth indicators and/or the respective one of said third and fourth indicators is provided together with said indication.

17. A method according to claim 10, which is configured to receive a seventh indicator of a third threshold value for the power with which said base station signal associated with the second cell is received at any mobile station outside the second cell, and wherein said determination comprises comparing said third threshold value with an actual received power value calculated from at least said first indicator.

18. A method according to claim 17, comprising making said determination after receiving an indication that transmissions made by one or more mobile stations in the second cell are experiencing excessive interference from transmissions made by one or more mobile stations in other cells, and wherein said seventh indicator is provided together with said indication.

19. An apparatus for use in a communications system comprising a plurality of cells, each cell associated with a base station configured for wireless communications with one or more mobile stations in the cell; wherein said apparatus is configured to:
communicate to a controlling unit for a first one of said cells an indicator of the power with which a base station signal associated with a second one of said cells is received at a first mobile station in said first cell.

20. An apparatus according to claim 19, which is further configured to communicate to said controlling unit an indicator of the current transmission power for said first mobile station.

21. A method for use in a communications system comprising a plurality of cells, each cell associated with a base station configured for wireless communications with one or more mobile stations in the cell; wherein said method comprises:
communicating to a controlling unit for a first one of said cells an indicator of the power with which a base station signal associated with a second one of said cells is received at a first mobile station in said first cell.

22. A method according to claim 21, further comprising communicating to said controlling unit an indicator of the current transmission power for said first mobile station.

23. An apparatus for use in a communications system comprising a plurality of cells, each cell associated with a base station configured for wireless communications with one or more mobile stations in the cell; wherein said apparatus is configured to:
communicate to a controlling unit for a first one of the cells a first indicator of the transmission power of a base station signal associated with a second one of the cells and capable of being received by a first mobile station in said first cell.

24. An apparatus according to claim 23, which is further configured to communicate to said controlling unit for said first cell a second indicator of a threshold value for pathloss experienced by said signal between the base station for the second cell and any mobile station outside the second cell.

25. An apparatus according to claim 23, which is further configured to communicate to said controlling unit a third indicator of a threshold value for the power with which any transmission from any mobile station outside the second cell is experienced by the base station for the second cell..

26. An apparatus according to any of claims 23 to 25, which is further configured to communicate to said controlling unit a fourth indicator of the Q offset parameter for the second cell.

27. An apparatus according to any of claims 23 to 26, which is further configured to communicate to said controlling unit an indication that transmissions made by one or more mobile stations in the second cell are experiencing excessive interference from transmissions made by one or more mobile stations in other cells, and to communicate said first indicator together with said indication.

28. An apparatus according to claim 26, which is further configured to communicate to said controlling unit an indication that transmissions made by one or more mobile stations in the second cell are experiencing excessive interference from transmissions made by one or more mobile stations in other cells, and to communicate said first indicator and/or said fourth indicator to said controlling unit together with said indication.

29. An apparatus for use in a communications system comprising a plurality of cells, each cell associated with a base station configured for wireless communications with one or more mobile stations in the cell; wherein said apparatus is configured to:
communicate to a controlling unit for a first one of the cells an indicator of a threshold value for the power with which said base station signal associated with a second one of the cells is received at any mobile station outside the second cell.

30. A method for use in a communications system comprising a plurality of cells, each cell associated with a base station configured for wireless communications with one or more mobile stations in the cell; wherein said method comprises:
communicating to a controlling unit for a first one of the cells a first indicator of the transmission power of a base station signal associated with a second one of the cells and capable of being received by a first mobile station in said first cell.

31. A method according to claim 30, further comprising communicating to said controlling unit for said first cell a second indicator of a threshold value for pathloss experienced by said base station signal associated with the seconc cell between the base station and any mobile station outside the second cell.

32. A method according to claim 30, further comprising communicating to said controlling unit a third indicator of a threshold value for the power with which any transmission from any mobile station outside the second cell is experienced by the base station for the second cell.

33. A method according to any of claims 30 to 32, further comprising communicating to said controlling unit a fourth indicator of the Q offset parameter for the second cell.

34. A method according to any of claims 30 to 33, further comprising communicating to said controlling unit an indication that transmissions made by one or more mobile stations in the second cell are experiencing excessive interference from transmissions made by one or more mobile stations in other cells, and to communicate said first indicator together with said indication.

35. A method according to claim 33, further comprising communicating to said controlling unit an indication that transmissions made by one or more mobile stations in the second cell are experiencing excessive interference from transmissions made by one or more mobile stations in other cells, and communicating said first indicator and/or said fourth indicator to said controlling unit together with said indication.

36. A method for use in a communications system comprising a plurality of cells, each cell associated with a base station configured for wireless communications with one or more mobile stations in the cell; wherein said method comprises communicating to a controlling unit for a first one of the cells an indicator of a threshold value for the power with which a base station signal associated with a second one of the cells is received at any mobile station outside the second cell.

37. A base station including an apparatus according to any of claims 1 to 9 and 23 to 29.

38. A user equipment including an apparatus according to claim 19 or claim 20.

39. A communication system including a plurality of base stations according to claim 37 and a plurality of user equipments according to claim 38.

40. A computer program product comprising program code means which when loaded into a computer of a base station configures the base station for performing the method of any of claims 10 to 18 and 30 to 36.

41. A computer program product comprising program code means which when loaded into a computer of a mobile station configures the mobile station for performing the method of claim 21 or claim 22.
